# EUROPÄISCHE PATENTSCHRIFT

(11) **EP 1 777 480 B1**
(45) Veröffentlichungstag und Bekanntmachung des Hinweises auf die Patenterteilung: **28.11.2018**
(21) Anmeldenummer: 06020006.0
(22) Anmeldetag: 25.09.2006
(51) Int. Cl.: F28F 27/02

(54) **Wärmeübertrager**
Heat exchanger
Echangeur de chaleur

(30) Priorität: 19.10.2005 DE 102005050421
(43) Veröffentlichungstag der Anmeldung: 25.04.2007
(73) Patentinhaber: MAHLE Behr GmbH & Co. KG, 70469 Stuttgart (DE)
(72) Erfinder: Auchter, Holger, 70599 Stuttgart (DE); Fricker, Thomas, 71686 Remseck (DE)
(74) Vertreter: Grauel, Andreas

(56) Entgegenhaltungen:
- DE-A1- 3 511 037
- GB-A- 391 556
- US-A1- 2003 047 300
- US-A1- 2004 159 121

## Beschreibung

Die Erfindung betrifft einen Wärmeübertrager mit einem Gehäuse, insbesondere mindestens einem Sammelkasten, an dem wenigstens ein Anschlussrohrstück angebracht ist, das mindestens ein Durchgangsloch zu dem Gehäuse aufweist.

Ein Wärmeübertrager gemäß dem Oberbegriff von Anspruch 1 ist zum Beispiel aus Dokument GB 391 556 bekannt.

Aus der deutschen Offenlegungsschrift DE 101 49 507 A1 ist ein Wärmetauscher eines Kraftfahrzeugs mit zwei Kühlmittelkästen bekannt, zwischen denen ein Rohrblock angeordnet ist. An einem der Kästen sind ein Zulaufrohr und ein Ablaufrohr angebaut. Die angebauten Rohre weisen wenigstens eine radiale Öffnung auf, die mit einer im Kasten ausgebildeten Seitenöffnung kommuniziert.

Aufgabe der Erfindung ist es, einen Wärmeübertrager mit einem Gehäuse, insbesondere mindestens einem Sammelkasten, an dem wenigstens ein Anschlussrohrstück angebracht ist, das mindestens ein Durchgangsloch zu dem Gehäuse aufweist, zu schaffen, dessen Temperaturverteilung einstellbar ist.

Die Aufgabe ist bei einem Wärmeübertrager mit einem Gehäuse, insbesondere mindestens einem Sammelkasten, an dem wenigstens ein Anschlussrohrstück angebracht ist, das mindestens ein Durchgangsloch zu dem Gehäuse aufweist, dadurch gelöst, dass in zumindest einem Anschlussrohrstück wenigstens ein zu Verstellzwecken bewegbares Verstellrohrstück aufgenommen ist, das mindestens ein Verstelldurchgangsloch aufweist, das durch Bewegen des Verstellrohrstücks in dem Anschlussrohrstück mehr oder weniger und/oder lokal variabel zur Deckung mit dem Durchgangsloch bringbar ist, um den Durchtrittsquerschnitt zwischen dem Anschlussrohrstück und dem Gehäuse gezielt zu variieren beziehungsweise einzustellen. Die Rohrstücke haben vorzugsweise die Gestalt von hohlen Kreiszylindern. Es ist aber auch möglich, dass die Rohrstücke z.B. einen (drei- bzw. vier-) eckigen Querschnitt aufweisen. Durch eine Relativbewegung des Verstellrohrstücks in dem Anschlussrohrstück kann der Durchtrittsquerschnitt zwischen dem Anschlussrohrstück und dem Gehäuse auf einfache Art und Weise definiert verändert werden. Insbesondere sind Veränderungen bezüglich Größe und/oder Lage des Durchtrittsquerschnitts möglich. Selbstverständlich ist es auch denkbar, dass mehrere Durchtrittsquerschnitte vorgesehen sind, und das auch die Anzahl der Durchtrittsquerschnitte in Abhängigkeit von der jeweiligen Einstellung variiert.

Ein bevorzugtes Ausführungsbeispiel des Wärmeübertragers ist dadurch gekennzeichnet, dass die Rohrstücke einen runden Querschnitt aufweisen und relativ zueinander verdrehbar sind. Bei dem Wärmeübertrager handelt es sich vorzugsweise um einen Heizkörper einer Klimaanlage, der mit einem Kühlmittel betrieben wird. Der Kühlmitteleintrittsstrom und/oder der Kühlmittelaustrittsstrom des Wärmeübertragers kann durch einfaches Verdrehen des Verstellrohrstücks in dem Anschlussrohrstück gesteuert werden.

Die Erfindung ist dadurch gekennzeichnet, dass wenigstens ein Verstelldurchgangsloch von einem Langloch gebildet wird. Es können auch mehrere Verstelldurchgangslöcher in einem bestimmten Muster angeordnet sein, das mit einem weiteren Muster abgestimmt ist, in dem mehrere Durchgangslöcher angeordnet sind. Auch kann die Größe bzw. die jeweilige Breite des bzw. der Verstelldurchgangslöcher variierend ausgebildet sein.

Die Erfindung ist dadurch gekennzeichnet, dass wenigstens ein Langloch schneckenförmig in dem Anschlussrohrstück verläuft. Dadurch kann der Durchtrittsquerschnitt lokal variiert werden. Es ist auch denkbar, dass sich die Ganghöhe zwischen den Gewindegängen des Langlochs ändert, insbesondere verkleinert bzw. vergrößert.

Ein weiteres bevorzugtes Ausführungsbeispiel des Wärmeübertragers ist dadurch gekennzeichnet, dass in der Nähe wenigstens einer Anschlussöffnung des Anschlussrohrstücks ein Dichtelement in radialer Richtung zwischen dem Verstellrohrstück und dem Anschlussrohrstück angeordnet ist. Dadurch wird der Zwischenraum zwischen dem Verstellrohrstück und dem Anschlussrohrstück nach außen hin abgedichtet.

Ein weiteres bevorzugtes Ausführungsbeispiel des Wärmeübertragers ist dadurch gekennzeichnet, dass wenigstens ein Verstellrohrstück in zumindest einem Anschlussrohrstück in axialer Richtung verschiebbar ist. Durch eine axiale Verschiebung kann zum einen der Durchtrittsquerschnitt zwischen dem Anschlussrohrstück und dem Gehäuse variiert werden. Zusätzlich oder alternativ kann eine Verschiebung des Anschlussrohrstücks in axialer Richtung, aber auch eine Anpassung der Wärmeübertrageranschlüsse an unterschiedliche Montageorte oder Bauräume erreicht werden.

Ein weiteres bevorzugtes Ausführungsbeispiel des Wärmeübertragers ist dadurch gekennzeichnet, dass das Gehäuse mindestens einen Sammelkasten umfasst, an dem wenigstens ein Anschlussrohrstück angebracht ist. Bei dem Anschlussrohrstück handelt es sich vorzugsweise um ein Zulaufrohr oder ein Ablaufrohr des Wärmeübertragers. Vorzugsweise sind sowohl das Zulaufrohr als auch das Ablaufrohr mit einem vorab beschriebenen Verstellrohrstück ausgestattet.

Ein weiteres bevorzugtes Ausführungsbeispiel des Wärmeübertragers ist dadurch gekennzeichnet, dass der Wärmeübertrager einen Heizkörperblock einer Klimaanlage umfasst. Durch die regelbare Gestaltung der Anschlüsse wird eine zusätzliche Verstellmöglichkeit geschaffen, durch die der Komfort im Innenraum eines Kraftfahrzeugs erheblich gesteigert werden kann.

Weitere Vorteile, Merkmale und Einzelheiten der Erfindung ergeben sich aus der nachfolgenden Beschreibung, in der unter Bezugnahme auf die Zeichnung verschiedene Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen;
- Figur 1: eine perspektivische Darstellung eines Verstellrohrstücks;
- Figur 2: eine perspektivische Darstellung eines Anschlussrohrstücks;
- Figur 3: eine perspektivische Darstellung eines Kühlmittelsammelkastens und
- Figur 4: eine perspektivische Darstellung eines ersten Ausführungsbeispiels eines erfindungsgemäßen Wärmeübertragers.

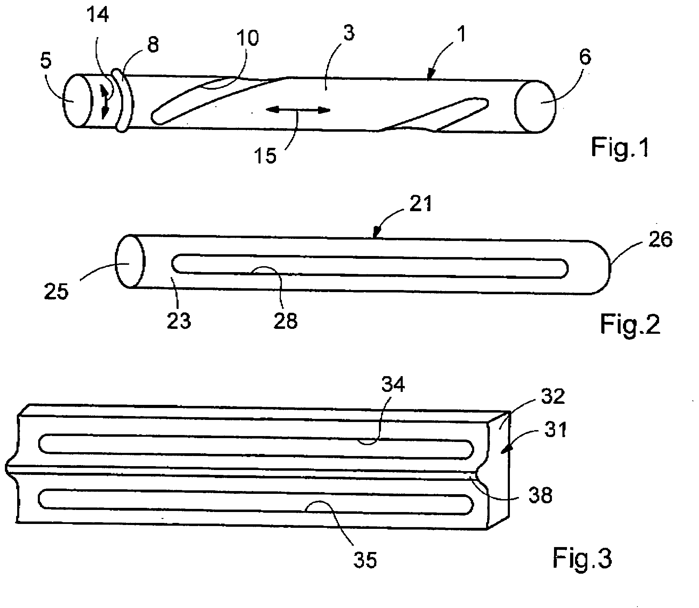

In Figur 1 ist ein Verstellrohrstück 1 perspektivisch dargestellt. Das Verstellrohrstück 1 hat die Gestalt eines hohlen Kreiszylinders 3 mit einem offenen Ende 5 und einem geschlossenen Ende 6. In der Nähe des offenen Endes 5 ist eine O-Ringdichtung 8 auf den hohlen Kreiszylinder 3 aufgeschoben. Die O-Ringdichtung 8 kann in einer Ringnut an dem hohlen Kreiszylinder 3 in axialer Richtung fixiert sein. Der hohle Kreiszylinder 3 ist mit einem schneckenförmig, schraubenförmig oder spiralförmig gewundenen Langloch 10 ausgestattet. Das Langloch 10 ermöglicht den Durchtritt eines Mediums durch den hohlen Kreiszylinder 3 von innen nach außen und umgekehrt. Durch einen Pfeil 14 ist angedeutet, dass der hohle Kreiszylinder 3 beziehungsweise das Verstellrohrstück 1 im eingebauten Zustand in Umfangsrichtung drehbar ist. Durch einen Doppelpfeil 15 ist angedeutet, dass das Verstellrohrstück 1 beziehungsweise der hohle Kreiszylinder 3 im eingebauten Zustand ebenfalls in axialer Richtung verschiebbar ist.

In Figur 2 ist ein Anschlussrohrstück 21 perspektivisch dargestellt. Das Anschlussrohrstück 21 bildet den Zulaufanschluss eines Heizkörpers einer Klimaanlage. Das Anschlussrohrstück 21 wird von einem hohlen Kreiszylinder 23 gebildet, der ein offenes Ende 25 und ein geschlossenes Ende 26 aufweist. Das offene Ende 25 bildet eine Anschlussöffnung, insbesondere eine Zulauföffnung, für ein Kühlmittel. Der hohle Kreiszylinder 23 ist mit einem in Längsrichtung verlaufenden Langloch 28 ausgestattet. Das Langloch 28 ermöglicht den Durchtritt von Kühlmittel.

In Figur 3 ist ein Kühlmittelsammelkasten 31 perspektivisch dargestellt. Der Kühlmittelsammelkasten 31 hat im Wesentlichen die Gestalt eines Quaders 32, der zwei in Längsrichtung parallel zueinander angeordnete Langlöcher 34 und 35 aufweist. Die Langlöcher 34 und 35 ermöglichen den Durchtritt von Kühlmittel. Anstelle eines einzigen Langlochs 34, 35 können auch jeweils mehrere Langlöcher in dem Kühlmittelsammelkasten 31 vorgesehen sein. Anstelle des Langlochs 35 oder des Langlochs 34 kann auch ein kürzeres Langloch (oder mehrere kürzere Langlöcher) in dem Kühlmittelsammelkasten ausgespart sein. Im zusammengebauten Zustand des erfindungsgemäßen Wärmeübertragers kommt an dem Langloch 34 des Kühlmittelsammelkastens 31 das Langloch 28 des Anschlussrohrstücks 21 (siehe Figur 2) zur Anlage.

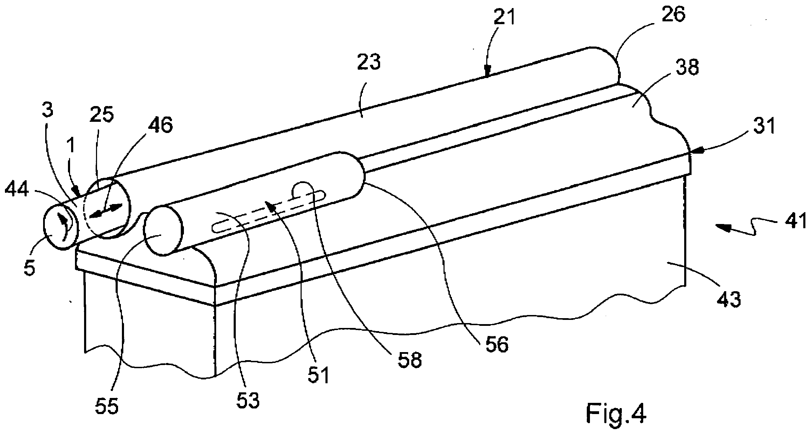

In Figur 4 ist ein erstes Ausführungsbeispiel eines erfindungsgemäßen Wärmeübertragers 41 perspektivisch dargestellt. Bei dem Wärmeübertrager 41 handelt es sich um den Heizkörper einer Klimaanlage eines Kraftfahrzeugs. Der Wärmeübertrager 41 umfasst einen Rohrblock 43, der in herkömmlicher Art und Weise aus einer größeren Anzahl von Rohren, insbesondere Flachrohren, besteht, die parallel zueinander verlaufen. Üblicherweise sind zwischen den Rohren zur Verbesserung der Wärmeübertragung an die zu erwärmende Luft Wellrippen vorgesehen. Der Rohrblock 43 wird an seiner breiten Seite mit einer Luftströmung im Wesentlichen senkrecht beaufschlagt und von dieser durchströmt. Die Flachrohre münden an einem Ende in den Kühlmittelsammelkasten 31, der auch als oberer Kühlmittelkasten bezeichnet wird. An dem anderen Ende münden die Flachrohre in einen weiteren (nicht dargestellten) Kühlmittelsammelkasten, der auch als unterer Kühlmittelsammelkasten bezeichnet wird.

Das Anschlussrohrstück 21 ist so an dem oberen Kühlmittelsammelkasten 31 befestigt, dass das Langloch in dem hohlen Kreiszylinder 3 deckungsgleich über dem Langloch des Kühlmittelsammelkastens 31 angeordnet ist. In dem hohlen Kreiszylinder 23 ist das Verstellrohrstück 1 aufgenommen. Durch einen Pfeil 44 ist angedeutet, dass das Verstellrohrstück 1 in dem Anschlussrohrstück 21 verdrehbar ist. Durch einen Doppelpfeil 46 ist angedeutet, dass das Verstellrohrstück 1 in axialer Richtung in dem Anschlussrohrstück 21 verschiebbar ist. Durch Verdrehen und/oder Verschieben des Verstellrohr-stücks 1 in dem Anschlussrohrstück 21 kann der Einströmort und der Einströmquerschnitt des Wärmeübertragers 41 definiert verstellt und variiert werden.

Benachbart zu dem Anschlussrohrstück 21 ist an dem oberen Sammelkasten 31 ein weiteres Anschlussrohrstück 51 angebracht. Das Anschlussrohrstück 51 hat die Gestalt eines hohlen Kreiszylinders 53, der im vorliegend dargestellten Ausführungsbeispiel etwa halb so lang wie der hohle Kreiszylinder 23 ist. Die Position des Abgriffs für den Rücklauf kann jedoch variabel sein. Der hohle Kreiszylinder 53 weist ein offenes Ende 55 und ein geschlossenes Ende 56 auf. Das offene Ende 55 des hohlen Kreiszylinders 53 stellt eine Ablauföffnung des Wärmeübertragers 41 dar, durch die das Kühlmittel austritt. Durch ein gestrichelt dargestelltes Langloch 58 ist angedeutet, dass der Innenraum des hohlen Kreiszylinders 53 mit dem Innenraum des oberen Sammelkastens 31 in Verbindung steht. Die beiden Anschlussrohrstücke 51 und 21 sind vorzugsweise durch eine Lötverbindung an dem oberen Sammelkasten 31 befestigt. In dem Anschlussrohrstück 51 ist ein (nicht dargestelltes) weiteres Verstellrohrstück verdrehbar und/oder verschiebbar aufgenommen. Durch Verdrehen und/oder Verschieben der Verstellrohrstücke in dem jeweiligen Anschlussrohrstück kann der Kühlmitteleintrittsstrom und der Kühlmittelaustrittsstrom des Wärmeübertragers 41 gesteuert werden oder ganz geschlossen werden. Auch ist es möglich, dass zumindest einer der Anschlüsse gar nicht verstellbar ist. Denkbar ist insbesondere in diesem Zusammenhang auch, dass ein Wärmeübertrager mehr als je einen Vor- und/oder Rücklauf besitzt. Dies kann sich zum Beispiel bei wasserseitig geregelten Wärmeübertragern mit getrennter links/rechts-Regelmöglichkeit als vorteilhaft erweisen.

## Patentansprüche

1. Wärmeübertrager mit einem Gehäuse, an dem wenigstens ein Anschlussrohrstück (21,51) angebracht ist, das mindestens ein Durchgangsloch (28) zu dem Gehäuse aufweist, wobei in zumindest einem Anschlussrohrstück (21,51) wenigstens ein zu Verstellzwecken bewegbares Verstellrohrstück (1) aufgenommen ist, das mindestens ein Verstelldurchgangsloch (10) aufweist, das durch Bewegen des Verstellrohrstücks (1) in dem Anschlussrohrstück (21) mehr oder weniger und/oder lokal variabel zur Deckung mit dem Durchgangsloch (28) bringbar ist, um den Durchtrittsquerschnitt zwischen dem Anschlussrohrstück (1) und dem Gehäuse gezielt zu variieren, **dadurch gekennzeichnet, dass** wenigstens ein Verstelldurchgangsloch (10) von einem Langloch gebildet wird und wobei wenigstens ein Langloch (10) schneckenförmig, schraubenförmig oder spiralförmig in dem Anschlussrohrstück (1) verläuft.

2. Wärmeübertrager nach Anspruch 1, **dadurch gekennzeichnet, dass** die Rohrstücke (1,21,51) einen runden Querschnitt aufweisen und relativ zueinander verdrehbar sind.

3. Wärmeübertrager nach Anspruch 1 oder 2, **dadurch gekennzeichnet, dass** in der Nähe wenigstens einer Anschlussöffnung (25) wenigstens eines Anschlussrohrstücks (21) ein Dichtelement (8) in radialer Richtung zwischen dem Verstellrohrstück (1) und dem Anschlussrohrstück (21) angeordnet ist.

4. Wärmeübertrager nach einem der vorhergehenden Ansprüche, **dadurch gekennzeichnet, dass** wenigstens ein Verstellrohrstück (1) in zumindest einem Anschlussrohrstück (21) in axialer Richtung verschiebbar ist.

5. Wärmeübertrager nach einem der vorhergehenden Ansprüche, **dadurch gekennzeichnet, dass** das Gehäuse mindestens einen Sammelkasten (31) umfasst, an dem wenigstens ein Anschlussrohrstück (21,51) angebracht ist.

6. Wärmeübertrager nach einem der vorhergehenden Ansprüche, **dadurch gekennzeichnet, dass** der Wärmeübertrager (41) einen Heizkörperblock (43) einer Klimaanlage umfasst.

## Claims

1. A heat exchanger with a housing on which at least one connecting tube piece (21, 51) with at least one through hole (28) to the housing is attached, wherein at least one adjustable tube piece (1) which is movable for adjusting purposes is received in at least one connecting tube piece (21, 51) and has at least one adjustable through hole (10) which can be brought into register with the through hole (28), more or less and/or locally variably, by moving the adjustable tube piece (1) in the connecting tube piece (21) in order to deliberately vary the passage cross-section between the connecting tube piece (1) and the housing, **characterised in that** at least one adjustable through hole (10) is formed by an elongate hole and wherein at least one elongate hole (10) runs inside the connecting tube piece (1) in a volute-like, screw-like or spiral-like manner.

2. The heat exchanger according to claim 1, **characterised in that** the tube pieces (1, 21, 51) have a round cross-section and are twistable relative to one another.

3. The heat exchanger according to claim 1 or 2, **characterised in that** a sealing element (8) is arranged near at least one connecting opening (25) of at least one connecting tube piece (21) in the radial direction between the adjustable tube piece (1) and the connecting tube piece (21).

4. The heat exchanger according to one of the preceding claims, **characterised in that** at least one adjustable tube piece (1) in at least one connecting tube piece (21) is displaceable in the axial direction.

5. The heat exchanger according to one of the preceding claims, **characterised in that** the housing comprises at least one collecting tank (31) on which at least one connecting tube piece (21, 51) is attached.

6. The heat exchanger according to one of the preceding claims, **characterised in that** the heat exchanger (41) comprises a radiator block (43) of an air-conditioning system.

## Revendications

1. Echangeur de chaleur comprenant un carter sur lequel est montée au moins une pièce tubulaire de raccordement (21, 51) qui présente au moins un trou traversant (28) ouvrant sur le carter, où au moins une pièce tubulaire de réglage (1) mobile dans le but de procéder à des réglages est logée dans au moins une pièce tubulaire de raccordement (21, 51), laquelle pièce tubulaire de réglage présente au moins un trou traversant de réglage (10) qui, par déplacement de la pièce tubulaire de réglage (1) dans la pièce de tubulaire de raccordement (21), peut coïncider plus ou moins et / ou de façon variable localement, avec le trou traversant (28), pour faire varier, de façon ciblée, la section de passage entre la pièce tubulaire de raccordement (1) et le carter, **caractérisé en ce qu'**au moins un trou traversant de réglage (10) est formé par un trou oblong et où au moins un trou oblong (10) s'étend dans la pièce tubulaire de raccordement (1), en ayant la forme d'une vis sans fin, d'une hélice ou d'une spirale.

2. Echangeur de chaleur selon la revendication 1, **caractérisé en ce que** les pièces tubulaires (1, 21, 51) présentent une section ronde et peuvent être déplacées en rotation l'une par rapport à l'autre.

3. Echangeur de chaleur selon la revendication 1 ou 2, **caractérisé en ce qu'**un élément d'étanchéité (8) est disposé, dans la direction radiale, entre la pièce tubulaire de réglage (1) et la pièce tubulaire de raccordement (21), ledit élément d'étanchéité se trouvant à proximité d'au moins une ouverture de raccordement (25) d'au moins une pièce tubulaire de raccordement (21).

4. Echangeur de chaleur selon l'une quelconque des revendications précédentes, **caractérisé en ce qu'**au moins une pièce tubulaire de réglage (1) peut être déplacée de façon coulissante, dans la direction axiale, dans au moins une pièce tubulaire de raccordement (21).

5. Echangeur de chaleur selon l'une quelconque des revendications précédentes, **caractérisé en ce que** le carter comprend au moins un bac collecteur (31) sur lequel est montée au moins une pièce tubulaire de raccordement (21, 51).

6. Echangeur de chaleur selon l'une quelconque des revendications précédentes, **caractérisé en ce que** l'échangeur de chaleur (41) comprend un ensemble (43) formant le corps de chauffe d'un système de climatisation.
